# EUROPEAN PATENT SPECIFICATION

(11) **EP 3 700 254 B1**
(45) Date of publication and mention of the grant of the patent: **03.12.2025**
(21) Application number: 17929082.0
(22) Date of filing: 20.10.2017
(51) Int. Cl.: H04W 24/10, H04W 72/04, H04L 5/00

(54) **USER TERMINAL AND WIRELESS COMMUNICATION METHOD**
BENUTZERENDGERÄT UND DRAHTLOSKOMMUNIKATIONSVERFAHREN
TERMINAL D'UTILISATEUR, ET PROCÉDÉ DE COMMUNICATION SANS FIL

(43) Date of publication of application: 26.08.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); LI, Huiling, Beijing 100190 (CN)
(74) Representative: Hoffmann Eitle
(86) International application number: PCT/JP2017/038054
(87) International publication number: WO 2019/077749

(56) References cited:
- EP-A1- 3 461 025
- JP-A- 2012 169 859
- US-A1- 2011 249 578
- US-A1- 2017 195 031
- SAMSUNG: "Discussion on CSI-RS Resource Activation", vol. RAN WG1, no. Nagoya, Japan; 20170918 - 20170921, 17 September 2017 (2017-09-17), XP051339402, Retrieved from the Internet <URL:http://www.3gpp.org/ftp/Meetings_3GPP_SYNC/RAN1/Docs/> [retrieved on 20170917]
- NTT DOCOMO: "Views on CSI Framework", vol. RAN WG1, no. Qingdao, P.R. China; 20170627 - 20170630, 26 June 2017 (2017-06-26), XP051300277, Retrieved from the Internet <URL:http://www.3gpp.org/ftp/Meetings_3GPP_SYNC/RAN1/Docs/> [retrieved on 20170626]
- LG ELECTRONICS: "Periodic CSI feedback enhancement for Rel-13 CA", vol. RAN WG1, no. Beijing, China; 20150824 - 20150828, 15 August 2015 (2015-08-15), XP050993719, Retrieved from the Internet <URL:http://www.3gpp.org/ftp/tsg_ran/WG1_RL1/TSGR1_82/Docs/> [retrieved on 20150815]
- NOKIA ET AL: "Discussion on rate matching resource", vol. RAN WG1, no. Nagoya, Japan; 20170918 - 20170921, 11 September 2017 (2017-09-11), XP051329207, Retrieved from the Internet <URL:http://www.3gpp.org/ftp/tsg_ran/WG1_RL1/TSGR1_AH/NR_AH_1709/Docs/> [retrieved on 20170911]
- QUALCOMM INCORPORATED: "Discussion on activation and release mechanism for beamformed CSI-RS", vol. RAN WG1, no. Lisbon, Portugal; 20161010 - 20161014, 1 October 2016 (2016-10-01), XP051159794, Retrieved from the Internet <URL:http://www.3gpp.org/ftp/tsg_ran/WG1_RL1/TSGR1_86b/Docs/> [retrieved on 20161001]
- ERICSSON: "A comparison of CSI-RS activation schemes based on MAC CE and DCI", 3GPP TSG-RAN WG1 #90BIS R1-1718439, 3 October 2017 (2017-10-03), XP051341621
- HUAWEI ET AL.: "Independent and joint control of CSI-RS transmission and CSI reporting for NR MIMO", 3GPP TSG RAN WG1 MEETING #87 R1-1611236, 5 November 2016 (2016-11-05), XP051175217

## Description

### Technical Field

The present invention relates to a user terminal and a radio communication method in next-generation mobile communication systems.

### Background Art

In the UMTS (Universal Mobile Telecommunications System) network, the specifications of Long Term Evolution (LTE) have been drafted for the purpose of further increasing high speed data rates, providing lower latency and so on (see Non-Patent Literature 1). Moreover, aiming at further wider bandwidth and higher speed than LTE (referred to as LTE Rel. 8 or Rel. 9), the specifications of LTE-A (LTE-Advanced, also referred to as LTE Rel. 10, Rel. 11, or Rel. 12) are drafted, and successor systems of LTE (referred to as, for example, FRA (Future Radio Access), 5G (5th generation mobile communication system), 5G+ (plus), NR (New Radio), NX (New radio access), FX (Future generation radio access), LTE Rel. 13, Rel. 14, Rel. 15 or later versions, and so on) are also under study.

In the existing LTE systems (for example, LTE Rel.8 to Rel. 13), an uplink signal with being mapped to an adequate radio resource is transmitted from a UE to an eNB. Uplink user data is transmitted by use of an uplink shared channel (PUSCH: Physical Uplink Shared Channel). Uplink control information (UCI) is transmitted by use of the PUSCH in a case of being transmitted together with the uplink user data, or transmitted by used of an uplink control channel (PUCCH (Physical Uplink Control Channel)) in a case of being transmitted alone.

The UCI includes acknowledge information (ACK/NACK) for a downlink shared channel (PDSCH (Physical Downlink Shared Channel)), a scheduling request, channel state information (CSI), and the like. The acknowledge information may be referred to as a HARQ-ACK (Hybrid Automatic Repeat reQuest Acknowledgment, ACK/NACK (A/N), retransmission control information, and the like.

The CSI is information based on an instant downlink channel state, and includes, for example, a channel quality indicator (CQI), a precoding matrix indicator (PMI), a precoding type indicator (PTI), a rank indicator (RI), and the like. The CSI is periodically or aperiodically signaled from the UE to the eNB.

Periodic CSI (P-CSI) is CSI periodically transmitted by the UE, based on a period and/or a resource signaled from the radio base station. On the other hand, aperiodic CSI (A-CSI) is CSI transmitted by the UE based on a CSI reporting request (also referred to as a trigger, a CSI trigger, a CSI request, and the like) from the radio base station.

The CSI trigger is included in an uplink scheduling grant (hereinafter, also referred to as a UL (Uplink) grant) transmitted on a downlink control channel (PDCCH (Physical Downlink Control Channel)). The UE signals, in accordance with the CSI trigger included in the UL grant, the A-CSI by use of the PUSCH specified by the UL grant. Such a signaling is referred to as an A-CSI reporting.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Document SAMSUNG: "Discussion on CSI-RS Resource Activation", 3GPP DRAFT; R1-1715943 NR CSI-RS RESOURCE, 17 September 2017, relates to CSI-RS resource activation for semi-persistent CSI-RS and CSI-RS resource activation for aperiodic CSI-RS.

Document NTT DOCOMO: "Views on CSI Framework", 3GPP DRAFT; R1 -1711077 CSI FRAMEWORK, 26 June 2017 relates to CSI framework.

### Summary of Invention

### Technical Problem

In future radio communication systems (for example, LTE Rel. Rel. 14, Rel. 15 or later versions, 5G, and NR), a study is underway also to control the CSI reporting in a structure different from the existing LTE systems (for example, LTE Rel. 13 or earlier).

For example, it is assumed that the base station configures a CSI measurement resource and/or CSI reporting for the UE such that the UE performs the CSI reporting to the base station. As such, in a case that the structure different from the existing LTE systems is adopted to perform the CSI measurement resource and/or the CSI reporting, it is difficult to adopt a control method for the CSI measurement resource and/or CSI reporting of the existing LTE systems as it is.

The present invention as defined in the appended claims has been made in light of the foregoing, and an object of the present invention is to provide a user terminal and a radio communication method capable of properly controlling a CSI measurement resource and/or CSI reporting in a case of adopting a structure different from the existing LTE systems to perform communication.

### Advantageous Effects of Invention

According to the present invention, it is possible to properly controlling a CSI measurement resource and/or CSI reporting in a case of adopting a structure different from the existing LTE systems to perform communication.

### Brief Description of Drawings

FIG. 1 is a diagram for describing CSI reporting expected in the future communication systems;
FIG. 2 is a diagram to show an example of a processing latency in activation of a CSI-RS resource;
FIG. 3A and FIG. 3B are diagrams to show an example of an acknowledgment method of an activation command;
FIG. 4 is a diagram to show an example of a processing latency in activation of CSI reporting;
FIG. 5 is a diagram to show an example of a schematic structure of a radio communication system according to an embodiment of the present invention;
FIG. 6 is a diagram to show an example of an overall structure of a radio base station according to an embodiment of the present invention;
FIG. 7 is a diagram to show an example of a functional structure of the radio base station according to an embodiment of the present invention;
FIG. 8 is a diagram to show an example of an overall structure of a user terminal according to an embodiment of the present invention;
FIG. 9 is a diagram to show an example of a functional structure of the user terminal according to an embodiment of the present invention; and
FIG. 10 is a diagram to show an example of a hardware structure of the radio base station and the user terminal according to an embodiment of the present invention.

### Description of Embodiments

In the existing LTE systems (Rel. 10 to Rel. 13), a reference signal for measuring a channel state in a downlink is defined. The reference signal for channel state measurement is also referred to as a CRS (Cell-specific Reference Signal) and a CSI-RS (Channel State Information-Reference Signal), and is a reference signal used to measure CSI such as a CQI (Channel Quality Indicator), a PMI (Precoding Matrix Indicator), and a RI (Rank Indicator) as a channel state.

A user terminal (UE) feeds back a result measured based on the reference signal for channel state measurement as the channel state information (CSI) to a radio base station at a certain timing. As a method for feeding back the CSI, a periodic CSI reporting (P-CSI) and an aperiodic CSI reporting (A-CSI) are defined.

The UE, in a case of the periodic CSI reporting, feeds back the P-CSI every certain periodicity (for example, 5-subframe periodicity, 10-subframe periodicity, and the like). In a case of no uplink data (for example, PUSCH) transmission at a certain timing (a certain subframe) of the P-CSI reporting, the UE transmits the P-CSI by use of an uplink control channel (for example, PUCCH).

In a case of adopting CA, the UE uses an uplink control channel in a certain cell (for example, PCell, PUCCH cell, PSCell) to transmit the P-CSI. On the other hand, in a case of uplink data transmission at a certain timing, the UE can use an uplink shared channel to transmit the P-CSI.

In a case of the aperiodic CSI reporting, the UE transmits the A-CSI in response to a CSI trigger (CSI request) from the radio base station. For example, the UE performs the A-CSI reporting certain timings (for example, 4 subframes) after receiving the CSI trigger.

The CSI trigger signaled from the radio base station is included in downlink control information (for example, DCI format 0/4) for an uplink scheduling grant (UL grant) transmitted on a downlink control channel. The UE uses an uplink shared channel specified by the UL grant to transmit the A-CSI in accordance with the trigger included in the downlink control information for the UL grant. In the case of adopting CA, the user terminal can receive a UL grant (including an A-CSI trigger) for a cell on a downlink control channel for another cell.

The UE can also measure the channel state by use of a CRS transmitted in each subframe. In this case, the UE reports a measurement result (CSI) to the radio base station at a certain timing.

Here, in the future radio communication systems (also referred to as 5G/NR), a study in underway to perform the CSI reporting in a structure different from the existing LTE systems. For example, the CSI reporting using a plurality of CSI types different in types and/or sizes of information to be reported is considered. The information type reported in the CSI may be referred to as a CSI parameter, a CSI feedback parameter, or a CSI information.

The plurality of CSI types may be configured depending on an intended usage (or a communication function). For example, a CSI type configured for communication using a single beam (also referred to as type 1 CSI) and a CSI type configured for communication using a multiple beam (also referred to as type 2 CSI) may be defined. Of course, the intended usage of the CSI type is not limited to those described above.

The UE and the base station may use the type 1-CSI to maintain a coarse link using the single beam. The UE and the base station may use the type 2-CSI for a link using the multiple beam (for example, a plurality of layers). For example, the type 2-CSI may be configured to include information per a layer (or, beam-related information such as a beam number).

The control may be made to report only some CSI parameters of the information type of the type 2-CSI (CSI parameters). The CSI including some information types may be referred to as partial type 2-CSI.

The UE, in a case of transmitting the type 1 CSI using the uplink control channel, reports the RI and/or the CRI (CSI-RS resource indicator), the PMI, and the CQI, for example, as the CSI parameters. Note that the PMI may include a PMI 1 that is a wideband and is long in feedback duration, and a PMI 2 that is a subband and is short in the feedback duration. Note that the PMI 1 is used to select a vector W1 and the PMI 2 is used to select a vector W2 to determine a precoder W based on W1 and W2 (W = W1 * W2).

The UE reports, in a case of transmitting the partial type 2-CSI using the uplink control channel, the RI, the CQI, and a number of non-zero wideband amplitude coefficients per layer, for example, as the CSI parameters. The number of the non-zero wideband amplitude coefficient corresponds to a beam number for which an amplitude is not scaled to zero. In this case, since it is not necessary to transmit information of a beam of which the amplitude is zero (or, may be equal to or less than a certain threshold that is considered to be equivalent to zero, or less than the certain threshold), transmission of the number of the non-zero wideband amplitude coefficient can reduce overhead of the PMI.

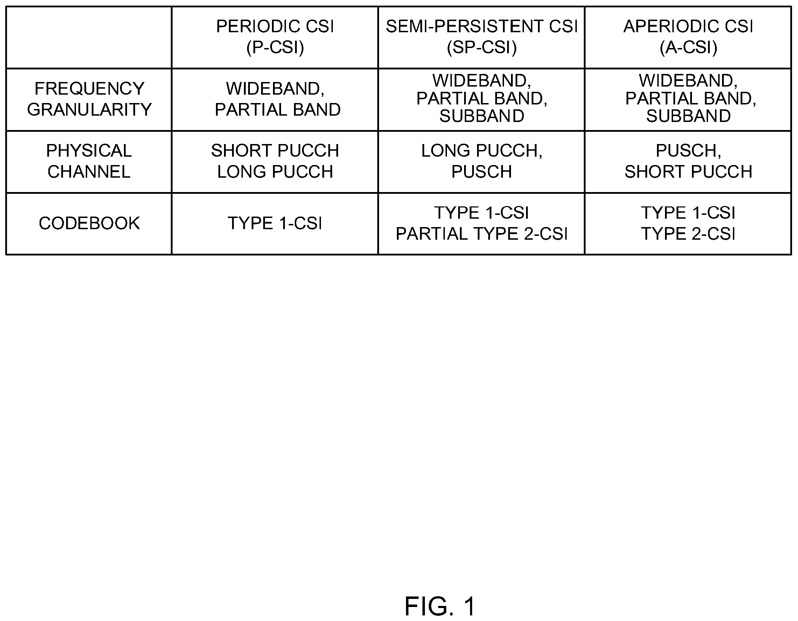

For the future radio communication systems, a study is underway to define a plurality of reporting periodicities (or, reporting timings) of the CSI, and associate each reporting periodicity with at least one of a frequency granularity for reporting, a physical channel used for the CSI reporting, and a codebook (or, a CSI type) (see FIG. 1).

For example, in a case of the periodic CSI reporting (P-CSI (Periodic CSI)), a wideband and/or a partial band are used as the frequency granularity, a short PUCCH and/or a long PUCCH are used as the physical channel, and the type 1-CSI is used as the codebook. In the case of the periodic CSI reporting, at least one of the reporting periodicity, the PUCCH resource to be used, and the CSI type is configured for the UE through higher layer signaling (for example, RRC signaling).

In a case of semi-persistent CSI reporting (SP-CSI (Semi-persistent CSI)), at least one of the wideband, the partial band, and the subband is used as the frequency granularity, the long PUCCH and/or the PUSCH are used as the physical channel, and the type 1-CSI and/or the partial type 2 CSI are used as the codebook. The partial type 2-CSI may be configured to be transmitted on the long PUCCH. In the case of the semi-persistent CSI reporting, MAC control information (Media Access Control Control Element (MAC CE)) can be used to configure the partial type 2 CSI and the like for the UE. Note that the downlink control information may be used in addition to the MAC CE.

In a case of the aperiodic CSI reporting (A-CSI (Aperiodic CSI)), at least one of the wideband, the partial band, and the subband is used as the frequency granularity, the PUSCH and/or the short PUCCH are used as the physical channel, and the type 1-CSI and/or the type 2-CSI are used as the codebook. In the case of the aperiodic CSI reporting, the downlink control information can be used to configure for the UE.

A size of the SP-CSI reporting may be larger as compared to a size of the P-CSI reporting. A size of the A-CSI reporting may be larger as compared to the size of the SP-CSI reporting. Here, the size refers to the number of bits or a payload expressing the reported information.

The short PUCCH corresponds to a UL control channel having a duration shorter (short duration) than a PUCCH format in the existing LTE systems (for example, LTE Rel. 8 to Rel. 13). The long PUCCH corresponds to a UL control channel having a duration longer (long duration) than the short duration of the short PUCCH.

The short PUCCH includes the certain number of symbols (for example, one, two, or three symbols) in a subcarrier spacing (SCS, sub-carrier spacing). In the short PUCCH, the uplink control information and the reference signal may be multiplexed in time division multiplexing (TDM), or frequency division multiplexing (FDM). The RS may be, for example, a demodulation reference signal (DMRS) used to demodulate the UCI.

The SCS for each symbol in the short PUCCH may be the same as or higher than a SCS for a data channel symbol (hereinafter, also referred to as a data symbol). The data channel may be, for example, a downlink data channel, an uplink data channel, or the like. The short PUCCH may be configured for a region including at least a last symbol of each slot.

On the other hand, the long PUCCH is allocated across a plurality of symbols in the slot to improve a coverage more than the short PUCCH and/or communicate more pieces of the UCI. For example, the long PUCCH may be configured using 7 symbols to 14 symbols.

In the long PUCCH, the UCI and the RS (for example, the DMRS) may be multiplexed in the TDM or the FDM. In the long PUCCH, a frequency hopping may be adopted every certain duration (for example, mini- (sub-) slot) in the slot. In a case that intra-slot frequency hopping is adopted, the DMRS of one or two symbols is preferably mapped every hopping.

The long PUCCH may include frequency resources the number of which is the same as the short PUCCH, or frequency resources the number of which is less than the short PUCCH (for example, one or two physical resource blocks (PRB)) to obtain a power amplification effect. The long PUCCH may be allocated in the slot the same as the short PUCCH.

A study is underway to use one of next options 1 to 3 for the A-CSI reporting on the short PUCCH including one CSI reporting.

Option 1: the CSI reporting is triggered by a CSI request field in the DL-related DCI (DL DCI). The DL-related DCI is DCI scheduling the DL data channel. A PUCCH resource indication field in the DL-related DCI indicates a PUCCH resource for the CSI reporting triggered out of a set of PUCCH resources configured by the higher layer.

Option 2: A UE-specific UL-related DCI is used. A CSI request field in the DCI triggers the CSI reporting. The CSI request field indicates whether or not the PUCCH or the PUSCH is used in the CSI reporting configuration.

Option 3: A UE-specific UL-related DCI is used. An indication of whether or not the PUCCH or the PUSCH is used is determined by bits in the DCI.

On the other hand, the activation/deactivation need to be performed in the SP-CSI. Once activated, the measuring and/or the reporting are periodically performed until a deactivation command is received, or until a timer expires.

However, how to activate/deactivate the CSI-RS resource and/or the CSI reporting is not determined. For example, whether the CSI-RS resource and the CSI reporting are independently activated/deactivated, or wholly activated/deactivated is not determined.

Then, the inventors of the present invention studied a method of activation/deactivation of the CSI-RS resource and/or the CSI reporting for the SP-CSI, and came up with the present invention.

Hereinafter, embodiments according to the present invention will be described in detail with reference to the drawings. Structures shown in the embodiments may be employed independently or in combination.

### (First Aspect)

A first aspect shows the method for activating/deactivating the CSI-RS resource. Here, activating/deactivating the CSI-RS resource refers to signaling to the user terminal on whether or not the CSI-RS resource is used.

The base station may transmit an activation command or a deactivation command for a specific CSI-RS resource to the UE. The base station may use the activated CSI-RS resource to periodically transmit the CSI-RS. The UE may use the activated CSI-RS resource to periodically receive the CSI-RS and measure the CSI.

The base station signals the CSI-RS resource and the periodicity of the CSI reporting in the SP-CSI to the UE through higher layer signaling (for example, RRC signaling).

The base station signals a measurable CSI-RS resource or a measurable set of CSI-RS resources to the UE through higher layer signaling (for example, RRC signaling). The activation command or the deactivation command may indicate the specific CSI-RS resource in the signaled set of CSI-RS resources.

The base station may recognize receiving the activation command by the UE based on acknowledge information (ACK or NACK) from the UE. The UE may use the PUCCH (layer 1) to transmit the acknowledge information, or may use the MAC CE (layer 2) included in the PUSCH to transmit the acknowledge information.

The specific CSI-RS resource may be activated or deactivate by one of next options 1 to 4. In other words, one of next options 1 to 4 may include the activation command or the deactivation command for the CSI-RS resource.

Option 1: The UE-specific DCI, that is, RNTI (Radio Network Temporary Identifier) allocated to the user through individual higher layer signaling, or the DCI of which a CRC is masked by a user ID.

As the UE-specific UCI, any of next options 1-1 and 1-2 may be used.

### Option 1-1: DL DCI

The DL DCI may have a field indicating the activation command or the deactivation command for the specific CSI-RS resource.

The UE may transmit acknowledge information for the activation command or the deactivation command by use of a 1-bit HARQ-ACK to the base station. The UE transmits, in a case of receiving the activation command or the deactivation command, as an acknowledge therefor, any of "ACK" and "NACK" of the 1-bit HARQ-ACK. The PUCCH resource indication field in the DL DCI may indicate a PUCCH resource for the 1-bit HARQ-ACK (feedback). For example, a set of PUCCH resources may be configured for the UE through higher layer signaling, and the PUCCH resource indication field may indicate one PUCCH resource in the set. The UE may determine a PUCCH resource based on the PUCCH resource indication field and use the determined PUCCH resource to transmit the 1-bit HARQ-ACK.

The DL DCI including the activation command or the deactivation command allows the UE to use the PUCCH specified by the DL DCI to transmit the acknowledge information. This allows the base station to confirm whether or not the UE normally receive the activation command or the deactivation command, and properly control the scheduling thereafter.

### Option 1-2: UL DCI

The UL DCI may have a field indicating the activation command or the deactivation command for the specific CSI-RS resource.

The UE may transmit acknowledge information for the activation command or the deactivation command by use of a MAC CE to the base station. Specifically, an acknowledge information region may be defined for the MAC CE**.** A PUSCH resource allocation field in the UL DCI may indicate a PUSCH resource including the MAC CE of the acknowledgment information. The UE may determine a PUSCH resource based on the PUSCH resource allocation field and use the determined PUSCH resource to transmit the MAC CE**.**

The UL DCI including the activation command or the deactivation command allows the UE to use the PUSCH specified by the UL DCI to transmit the acknowledge information. This allows the base station to confirm whether or not the UE normally receive the activation command or the deactivation command, and properly control the scheduling thereafter.

### Option 2: group common DCI

Group common DCI referred to here is DCI common to the UE group, and is not slot format related information (SFI). The group common DCI may have a field indicating the activation command or the deactivation command for the specific CSI-RS resource.

Since the group common DCI may be possibly received by a plurality of UEs, the UE may not transmit the acknowledge information for the activation command or the deactivation command. The base station may expect that the UE can receive the activation command or the deactivation command to control the SP-CSI.

Using the group common DCI allows a plurality of UEs to receive the activation command or the deactivation command, suppressing an overhead of the signaling.

### Option 3: RRC

The RRC signaling may include the activation command or the deactivation command for the specific CSI-RS resource. The UE may transmit acknowledge information for the activation command or the deactivation command by use of RRC reconfiguration completion to the base station. CSI-RS measurement using option 3 may be referred to as P-CSI measurement.

### Option 4: MAC CE

The MAC CE in the PDSCH may include the activation command or the deactivation command for the specific CSI-RS resource. The DL DCI scheduling the PDSCH including the MAC CE may include a PDSCH allocation field for scheduling the PDSCH.

The UE may transmit acknowledge information for the activation command or the deactivation command by use of a 1-bit HARQ-ACK to the base station. The DL DCI for scheduling the PDSCH including the MAC CE may include the PUCCH resource indication field indicating the PUCCH resource for the 1-bit HARQ-ACK. For example, a set of PUCCH resources may be configured for the UE through higher layer signaling, and the PUCCH resource indication field may indicate one PUCCH resource in the set. The UE may determine a PUCCH resource based on the PUCCH resource indication field and use the determined PUCCH resource to transmit the 1-bit HARQ-ACK. This allows the base station to confirm whether or not the UE normally receive the activation command or the deactivation command, and properly control the scheduling thereafter.

Even in a case of using the MAC CE for the activation command or the deactivation command, the UE can use the PUCCH to transmit the acknowledgment information, suppressing an overhead and/or latency of the signaling.

A UE operation for the activation command will be described.

In a case that the CSI-RS resource is activated, the UE may expect that the DL data is rate-matched around the activated CSI-RS resource in the PDSCH to decode the PDSCH.

A process of the rate matching is to control the number of bits after coding (coded bits) in consideration of an actually available radio resource. In a case that the number of coded bits is smaller than the number of bits mappable to the actually available radio resource, at least some of the coded bits may be repeated. In a case that the number of coded bits is larger than the number of mappable bits, some of coded bits may be deleted.

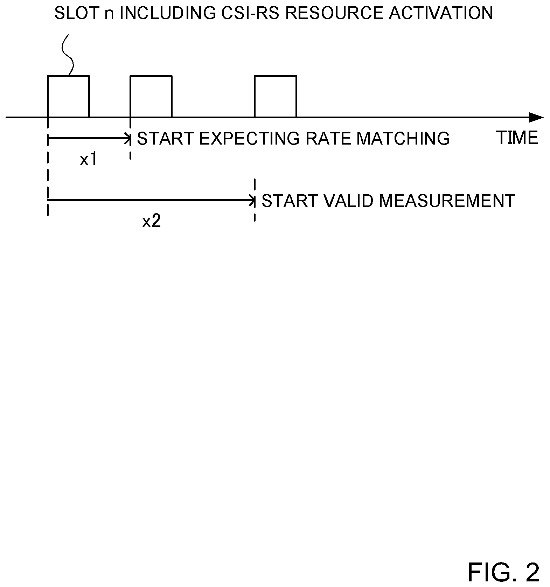

As shown in FIG. 2, in a case that a slot where the UE receives the activation command is slot n, the rate matching may be expected in slot n + x1 and subsequent slots. For example, the base station allocates coded data on resources, among the PDSCH resources, around the activated CSI-RS resource in the slot n + x1 and subsequent slots. The UE decodes the coded data allocated on the resource, among the PDSCH resources, around the activated CSI-RS resource in the slot n + x1 and subsequent slots.

x1 represents a time (processing latency) required from the receiving the activation command until the decoding the PDSCH based on the rate matching. x1 may be fixed depending on the specification. For example, x1 may be zero. In this case, the UE may decode the PDSCH based on the rate matching from the slot where the activation command is received. x1 may have another value.

x1 may be different depending on the UE. The UE may transmit UE capability signaling indicating x1 to the base station. The base station and the UE may determine x1 based on the UE capability signaling.

In the case that the CSI-RS resource is activated, the UE measures the activated CSI-RS resource.

As shown in FIG. 2, in the case that a slot where the UE receives the activation command is slot n, valid measurement are performed in slot n + x2 and subsequent slots. The UE measures the CSI-RS resource in the slot n and subsequent slots, and before the slot n + x2. Measurement results in the slot n and subsequent slots, and before the slot n + x2 may not be valid.

x2 represents a time (processing latency) required from the receiving the activation command until the measuring the CSI-RS. x2 may include a time for decoding and interpreting the activation command. x2 may be fixed depending on the specification. For example, x2 may be 8 slots or the like. In this case, the UE may start measuring the CSI-RS from 8 slots after the slot where the activation command is received. x2 may have another value.

x2 may be different depending on the UE. The UE may transmit the UE capability signaling indicating x2 to the base station. The base station and the UE may determine x2 based on the UE capability signaling.

The base station and the UE determine the timing to start the rate matching of the PDSCH based on the processing latency x1 configured in advance, allowing the UE to properly decode the DL data. The base station and the UE determine the timing to start the valid measurement based on the processing latency x2 configured in advance, allowing the base station to properly acquire the valid measurement results.

In a case that the specific CSI-RS resource is deactivated, the UE may expect that the PDSCH is not rate-matched around the deactivated CSI-RS resource to decode the PDSCH. For example, in a case that a slot where the UE receives the deactivation command is slot n, the rate matching may not be expected in slot n + x1 and subsequent slots.

In the case that the specific CSI-RS resource is deactivated, the valid measurement may not be performed. For example, in the case that a slot where the UE receives the deactivation command is slot n, the valid measurement may not be performed in slot n + x2 and subsequent slots.

In the case that the specific CSI-RS resource is activated, the UE may start a timer of a certain time, and deactivate the CSI-RS resource when the timer expires.

### (Second Aspect)

A second aspect shows the method for activating/deactivating the CSI-RS reporting.

The base station may transmit an activation command or a deactivation command for the CSI reporting to the UE. The UE, in a case that the CSI reporting is activated, may periodically transmit the CSI reporting. The base station, in a case that the CSI reporting is activated, may periodically receive the CSI reporting.

The UE may use the PUCCH to transmit to CSI reporting, or may use the PUSCH to transmit the CSI reporting.

The base station may recognize receiving the activation command by the UE based on acknowledge information or the CSI reporting from the UE. The UE may use the PUCCH (layer 1) to transmit the acknowledge information, or may use the MAC CE (layer 2) included in the PUSCH to transmit the acknowledge information.

The CSI reporting for the specific CSI-RS resource may be activated or deactivate by one of next options 1 to 4. In other words, one of next options 1 to 4 may include the activation command or the deactivation command for the CSI reporting.

### Option 1: UE-specific DCI

The UE-specific DCI including the activation command for the CSI reporting may be separated from the activation command for the specific CSI-RS resource. The UE-specific DCI including the deactivation command for the CSI reporting may be separated from the deactivation command for the specific CSI-RS resource.

As the UE-specific UCI, any of next options 1-1 and 1-2 may be used.

### Option 1-1: DL DCI

The DL DCI may include a field indicating the activation command or the deactivation command for the CSI reporting.

The UE may transmit acknowledge information for the activation command or the deactivation command by use of a 1-bit HARQ-ACK to the base station. The PUCCH resource indication field in the DL DCI may indicate a PUCCH resource for the 1-bit HARQ-ACK. For example, a set of PUCCH resources may be configured for the UE through higher layer signaling, and the PUCCH resource indication field may indicate one PUCCH resource in the set. The UE may determine a PUCCH resource based on the PUCCH resource indication field and use the determined PUCCH resource to transmit the 1-bit HARQ-ACK.

The DL DCI including the activation command or the deactivation command allows the UE to use the PUCCH specified by the DL DCI to transmit the acknowledge information. This allows the base station to confirm whether or not the UE normally receive the activation command or the deactivation command, and properly control the scheduling thereafter.

### Option 1-2: UL DCI

The UL DCI may include a field indicating the activation command or the deactivation command for the CSI reporting.

The UE may transmit acknowledge information for the activation command or the deactivation command by use of a MAC CE to the base station. Specifically, an acknowledge information region may be defined for the MAC CE. A PUSCH resource allocation field in the UL DCI may indicate a PUSCH resource including the MAC CE of the acknowledgment information. The UE may determine a PUSCH resource based on the PUSCH resource allocation field and use the determined PUSCH resource to transmit the MAC CE.

The UL DCI including the activation command or the deactivation command allows the UE to use the PUSCH specified by the UL DCI to transmit the acknowledge information. This allows the base station to confirm whether or not the UE normally receive the activation command or the deactivation command, and properly control the scheduling thereafter.

Option 2: Activation command or deactivation command for specific CSI-RS resource (combined activation command or deactivation command)

One activation command may activate both the specific CSI-RS resource and the CSI reporting. One deactivation command may deactivate both the specific CSI-RS resource and the CSI reporting.

Any of next options 2-1 and 2-2 may be used as the activation command or the deactivation command for both the CSI-RS resource and the CSI reporting.

### Option 2-1: DL DCI

The DL DCI may include a field indicating the activation command or the deactivation command.

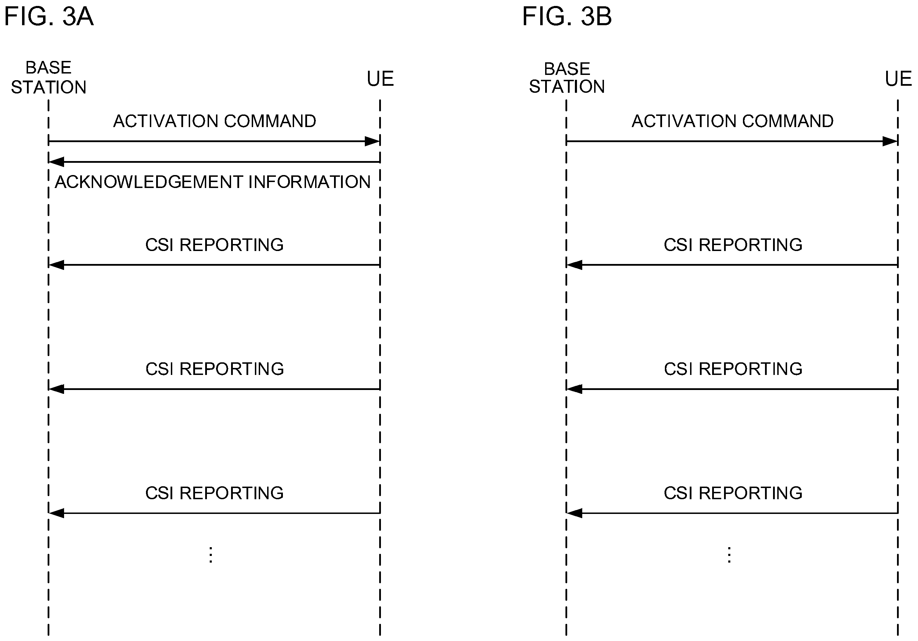

As shown in FIG. 3A, the UE may transmit acknowledge information for the activation command or the deactivation command by use of a 1-bit HARQ-ACK to the base station. The PUCCH resource indication field in the DL DCI may indicate a PUCCH resource for the 1-bit HARQ-ACK. For example, a set of PUCCH resources may be configured for the UE through higher layer signaling, and the PUCCH resource indication field may indicate one PUCCH resource in the set. The UE may determine a PUCCH resource based on the PUCCH resource indication field and use the determined PUCCH resource to transmit the 1-bit HARQ-ACK. This allows the base station to confirm whether or not the UE normally receive the activation command or the deactivation command, and properly control the scheduling thereafter.

As shown in FIG. 3B, the UE may transmit the CSI reporting on the PUCCH or the PUSCH to signal an ACK for the activation command to the base station. In other words, the CSI reporting itself may be considered as the ACK. The base station can determine, in a case of no CSI reporting from the UE, that activation command is not normally received. Strictly defining of a resource and/or timing of the CSI reporting allows the base station to determine the receiving of the CSI reporting to determine the ACK for the activation command. The PUCCH resource indication field in the DL DCI including the activation command may indicate the long PUCCH resource used for the CSI reporting. The base station may recognize, in a case of receiving the deactivated CSI reporting, a NACK for the deactivation command. This allows the base station to confirm whether or not the UE normally receive the activation command or the deactivation command, and properly control the scheduling thereafter.

The UE may determine which of the PUCCH of the PUSCH is used for the CSI reporting based on a specific bit in the DL DCI.

### Option 2-2: UL DCI

The UL DCI may have a field indicating the activation command or the deactivation command.

As shown in FIG. 3A, the UE may transmit acknowledge information for the activation command or the deactivation command by use of a MAC CE to the base station. Specifically, an acknowledge information region may be defined for the MAC CE. A PUSCH resource allocation field in the UL DCI may indicate a PUSCH resource including the MAC CE of the acknowledgment information. The UE may determine a PUSCH resource based on the PUSCH resource allocation field and use the determined PUSCH resource to transmit the MAC CE. This allows the base station to confirm whether or not the UE normally receive the activation command or the deactivation command, and properly control the scheduling thereafter.

As shown in FIG. 3B, the UE may transmit the CSI reporting on the PUSCH or the PUCCH to report an ACK for the activation command to the base station. In other words, the CSI reporting itself may be considered as the ACK. The base station can determine, in a case of no CSI reporting from the UE, that activation command is not normally received. Strictly defining of a resource and/or timing of the CSI reporting allows the base station to determine the receiving of the CSI reporting to determine the ACK for the activation command. The PUSCH resource allocation field in the UL DCI including the activation command may indicate the PUSCH resource used for the CSI reporting. The base station may recognize, in a case of receiving the deactivated CSI reporting, a NACK for the deactivation command. This allows the base station to confirm whether or not the UE normally receive the activation command or the deactivation command, and properly control the scheduling thereafter.

The UE may determine which of the PUCCH of the PUSCH is used for the CSI reporting, based on a specific bit in the UL DCI.

As shown in FIG. 3A, the UE transmitting the acknowledge information for the activation command allows the base station to acquire the acknowledge information earlier than an initial CSI reporting, suppressing a latency of the ACK recognition. As shown in FIG. 3B, the base station recognizing the first CSI reporting as the acknowledge information for the activation command can suppress an overhead of the signaling.

### Option 3: RRC

The RRC signaling may include the activation command or the deactivation command for the CSI reporting. The UE may transmit acknowledge information for the activation command or the deactivation command by use of RRC reconfiguration completion to the base station. The CSI reporting using option 3 may be referred to as P-CSI reporting.

The RRC signaling including the activation command or the deactivation command for the CSI reporting may be separated from the RRC signaling including the activation command or the deactivation command for the CSI-RS resource, or may be the RRC signaling including the activation command or the deactivation command for the CSI-RS resource.

### Option 4: MAC CE

The MAC CE in the PDSCH includes the activation command or the deactivation command for the CSI reporting. The DL DCI scheduling the PDSCH including the MAC CE may include a PDSCH allocation field for scheduling the PDSCH.

The UE may transmit acknowledge information for the activation command or the deactivation command by use of a 1-bit HARQ-ACK to the base station. The DL DCI for scheduling the PDSCH including the MAC CE may include the PUCCH resource indication field indicating the PUCCH resource for the 1-bit HARQ-ACK. For example, a set of PUCCH resources may be configured for the UE through higher layer signaling, and the PUCCH resource indication field may indicate one PUCCH resource in the set. The UE may determine a PUCCH resource based on the PUCCH resource indication field and use the determined PUCCH resource to transmit the 1-bit HARQ-ACK. This allows the base station to confirm whether or not the UE normally receive the activation command or the deactivation command, and properly control the scheduling thereafter.

Even in a case of using the MAC CE for the activation command or the deactivation command, the UE can use the PUCCH to transmit the acknowledgment information, suppressing an overhead and/or latency of the signaling.

The MAC CE including the activation command or the deactivation command for the CSI reporting is separated from the MAC CE including the activation command or the deactivation command for the CSI-RS resource.

A UE operation for the activation command will be described.

In a case that the CSI reporting is activated, and the CSI reporting collides with the PUSCH, the UE may rate-match the UL data around the CSI reporting resource in the PDSCH. In this way, the method for multiplexing the UCI and the UL data in the PUSCH may be referred to as UCI piggyback.

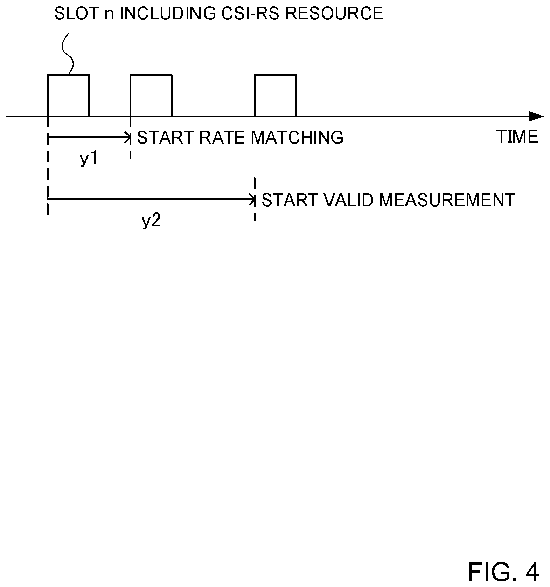

As shown in FIG. 4, in a case that a slot where the UE receives the activation command is slot n, the rate matching may be performed in slot n + y1 and subsequent slots. For example, the UE allocates coded data on resources, among the PUSCH resources, around the CSI reporting resource in the slot n + y1 and subsequent slots. The base station decodes the coded data allocated on the resource, among the PUSCH resource, around the CSI reporting resource in the slot n + y1 and subsequent slots.

y1 represents a time (processing latency) required from the receiving the activation command until adopting the rate matching. y1 may be fixed depending on the specification. For example, y1 may be zero. In this case, the UE may perform the rate matching from the slot where the activation command is received. y1 may have another value.

y1 may be different depending on the UE. The UE may transmit the UE capability signaling indicating y1 to the base station. The base station and the UE may determine y1 based on the UE capability signaling.

y1 may be equal to x1.

In the case that the CSI reporting is activated, the UE may report valid measurement results of the activated CSI-RS resource.

As shown in FIG. 4, in the case that a slot where the UE receives the activation command is slot n, results of measurement performed in slot n + y2 and subsequent slots may be the valid measurement results. The UE may report the measurement results in the slot n and subsequent slots, and before the slot n + y2. The measurement results in the slot n and subsequent slots, and before the slot n + y2 may not be correct. The base station may recognize the measurement results in the slot n + y2 and subsequent slots as the valid measurement results.

y2 represents a time (processing latency) required from the receiving the activation command until the CSI reporting. y2 may include a time for decoding and interpreting the activation command. x2 may be fixed depending on the specification. For example, y2 may be 12 slots or the like. In this case, the UE may start measuring the CSI-RS from 12 slots after the slot where the activation command is received. y2 may have another value.

y2 may be different depending on the UE. The UE may transmit the UE capability signaling indicating y2 to the base station. The base station and the UE may determine x2 based on the UE capability signaling.

y2 may be equal to x2.

The base station and the UE determine the timing to start the rate matching of the PUSCH based on the processing latency y1 configured in advance, allowing the UE to properly decode the UL data. The base station and the UE determine the timing to start the valid measurement based on the processing latency y2 configured in advance, allowing the base station to properly acquire the valid measurement results.

In a case that the CSI reporting is deactivated, the UE may not perform the rate matching of the PUSCH around the deactivated CSI reporting resource. In a case that a slot where the UE receives the deactivation command is slot n, the rate matching may not be performed in slot n + y1 and subsequent slots.

In the case that the CSI reporting is deactivated, the UE may not perform the deactivated CSI reporting. In the case that a slot where the UE receives the deactivation command is slot n, the valid measurement results may not be reported in slot n + y2 and subsequent slots.

In the case that the CSI reporting is activated, the UE may start a timer of a certain time, and deactivate the CSI-RS resource when the timer expires.

Signaling on activation or deactivation of the SP-CSI is the DCI (DL UCI or UL DCI), a size and/or format of the DCI may be the same as the size and/or format of DCI for the A-CSI trigger. The UE may distinguish the DCI for the activation or deactivation of the SP-CSI from the DCI for the A-CSI trigger based on an implicit signaling or an explicit signaling.

The implicit signaling may be at least one of the RNTI for scrambling a CRC (Cyclic Redundancy Check) of the DCI, a search space, and an aggregation level (AL), and may be different between the SP-CSI and the A-CSI. The explicit signaling may be bits in the DCI.

The size and/or format of the DCI for the SP-CSI being the same as the size and/or format of the DCI for the A-CSI can suppress a load of blind decoding by the UE.

### (Variation 1)

A variation of the case that the DL DCI is used to activate the CSI-RS resource for the SP-CSI (DL DCI-based SP-CSI resource activation, option 1-1 in the first aspect or option 2-1 in the second aspect) will be described.

The DL DCI may activate or deactivate the CSI-RS resource in the same frequency band (self-carrier activation), or may activate or deactivate the CSI-RS resource in another frequency band (cross-carrier activation). Each frequency band may be a component carrier (CC), or a partial band (Band Width Part (BWP)).

The BWP is one or more frequency bands (partial band) in the carrier (CC, system band, or the like), and is configured for each of the DL and the UL to be used for the DL and/or UL communication. Configuring the BWP for the partial band in the system band can reduce a processing load on the UE (for example, a processing load by the blind decoding in each frequency band, a sampling rate, a monitored bandwidth.

The DL DCI may activate or deactivate the BWP. The DL DCI may activate or deactivate a secondary cell (SCell) in the carrier aggregation (CA). The SCell may be configured for the UE through RRC signaling to be in a non-active state, and may be activated or deactivated by the DCI or the MAC CE.

One piece of DL DCI activating or deactivating a plurality of any of the CSI-RS resource in the same frequency band, the CSI-RS resource in another frequency band, the BWP, and the SCell can suppress an overhead of the signaling as compared to individually activating or deactivating.

The CRC of the DL DCI activating or deactivating the CSI-RS resource may be masked by a UE identifier (which may be referred to as SP-CSI-RNTI, for example).

The UE may transmit acknowledge information for the DL DCI activating or deactivating the CSI-RS resource. The DL DCI activating or deactivating the CSI reporting may communicate a HARQ-ACK resource and/or timing for the acknowledge information to the UE. For example, the PUCCH resource indication field in the DL DCI may indicate the HARQ-ACK resource for the acknowledge information. In the case that one piece of DL DCI activates or deactivates a plurality of any of the CSI-RS resource in the same frequency band, the CSI-RS resource in another frequency band, the BWP, and the SCell, the acknowledge information allows the base station to recognize that the plurality of any thereof are normally activated or deactivated, and properly perform the scheduling thereafter.

In a case that there is another piece of UCI, acknowledge information for the DL DCI activating or deactivating the CSI-RS resource may be mapped to a fixed position of a UCI codebook and coded to be combined with another UCI.

### (Variation 2)

A variation of the case that the UL DCI is used to activate the CSI reporting for the SP-CSI (UL DCI-based SP-CSI reporting activation, option 1-2 or option 2-2 in the second aspect) will be described.

The UL DCI may activate or deactivate the CSI reporting in the same carrier (self-carrier activation), or may activate or deactivate the CSI reporting in another carrier (cross-carrier activation).

The UL DCI may activate or deactivate the BWP. The UL DCI may activate or deactivate the SCell in the CA.

One piece of UL DCI activating or deactivating a plurality of any of the CSI reporting for the CSI-RS resource in the same frequency band, the CSI reporting for the CSI-RS resource in another frequency band, the BWP, and the SCell can suppress an overhead of the signaling as compared to individually activating or deactivating those.

The CRC of the UL DCI activating or deactivating the CSI reporting may be masked by a UE identifier (which may be referred to as SP-CSI-RNTI, for example).

The UE may transmit acknowledge information for the UL DCI activating or deactivating the CSI reporting by use of a MAC CE. The UL DCI activating or deactivating the CSI reporting may communicate a PUSCH resource and/or timing for the MAC CE including the acknowledge information to the UE. For example, the PUSCH resource allocation field in the UL DCI may indicate the PUSCH resource for the MAC CE including the acknowledge information. In the case that one piece of UL DCI activates or deactivates a plurality of any of the CSI reporting for the CSI-RS resource in the same frequency band, the CSI reporting for the CSI-RS resource in another frequency band, the BWP, and the SCell, the acknowledge information allows the base station to recognize that the plurality of any thereof are normally activated or deactivated, and properly perform the scheduling thereafter.

### (Variation 3)

A variation of the case that the MAC CE is used to activate the CSI-RS resource or CSI reporting for the SP-CSI (MAC CE-based SP-CSI resource/reporting activation, option 4 in the first aspect or option 4 in the second aspect) will be described.

The MAC CE may activate or deactivate the BWP and/or the SCell together with the CSI-RS resource and/or CSI reporting for the SP-CSI.

One MAC CE activating or deactivating a plurality of any of the CSI-RS resource and/or CSI reporting, the BWP, and the SCell can suppress an overhead of the signaling as compared to individually activating or deactivating those.

The normal DL DCI may schedule the PDSCH that includes the MAC CE activating or deactivating the CSI-RS resource and/or CSI reporting.

The UE may signal a HARQ-ACK for the PDSCH like the normal DL data.

The DL DCI that schedules the MAC CE activating or deactivating the CSI-RS resource and/or the CSI reporting (for example, the PUCCH resource indication field) may communicate a HARQ-ACK timing and/or resource for the MAC CE to the UE.

The DL DCI that schedules the MAC CE activating or deactivating the CSI-RS resource and/or the reporting, or the MAC CE itself may communicate a timing and/or resource of the CSI-RS resource and/or CSI reporting to the UE.

### (Variation 4)

The P-CSI of the A-CSI may be combined with the SP-CSI.

A combination of the P-CSI measurement and the SP-CSI reporting may be used.

For example, the CSI-RS resource may be configured through RRC signaling, the CSI reporting may be activated or deactivated by the DCI or the MAC CE. A method of activation or deactivation of the CSI reporting may be according to any of those in the second aspect, Variation 2, and Variation 3.

A combination of the SP-CSI measurement and the A-CSI reporting may be used.

For example, the CSI-RS resource may be activated or deactivated by the DCI or the MAC CE, and the CSI reporting may be triggered by the DCI. A method of activation or deactivation of the CSI-RS resource may be according to any of those in the first aspect, Variation 1, and Variation 3.

### (Radio Communication System)

Hereinafter, a structure of a radio communication system according to one embodiment of the present invention will be described. In this radio communication system, the radio communication method according to each embodiment of the present invention described above may be used alone or may be used in combination for communication.

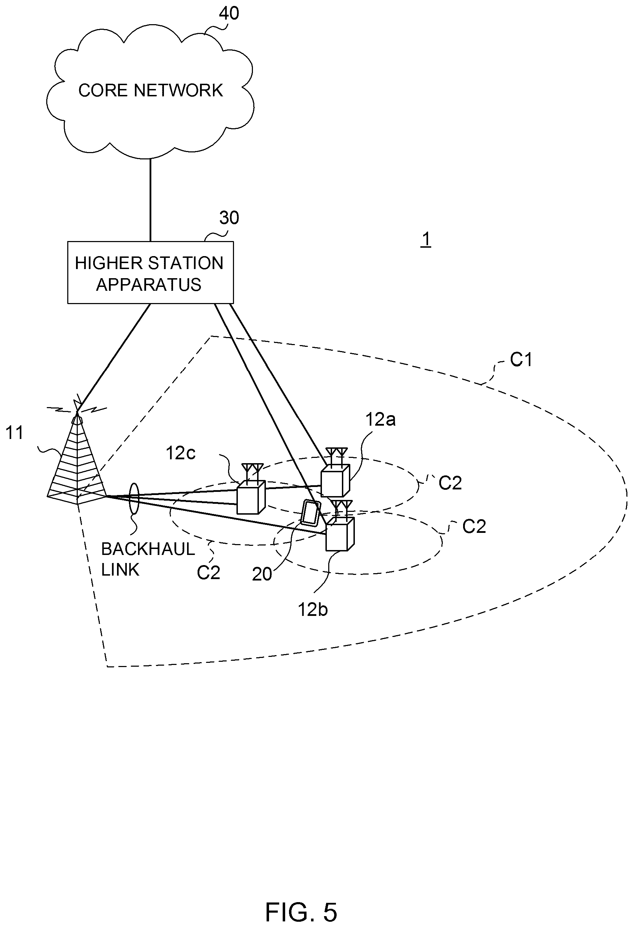

FIG. 5 is a diagram to show an example of a schematic structure of the radio communication system according to one embodiment of the present invention. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, one or more user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminal 20 uses the macro cell C1 and the small cells C2 at the same time by means of CA or DC. The user terminal 20 may adopt CA or DC by using a plurality of cells (CCs) (for example, five or less CCs, or six or more CCs).

Between the user terminal 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminal 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

The OFDMA is a multi-carrier communication scheme to perform communication by dividing a frequency band into a plurality of narrow frequency bands (subcarriers) and mapping data to each subcarrier. The SC-FDMA is a single carrier communication scheme to mitigate interference between terminals by dividing the system bandwidth into bands including one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. The downlink control information (DCI), including PDSCH and/or PUSCH scheduling information, and so on are communicated on the PDCCH.

Note that the scheduling information may be signaled by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. The acknowledge information (for example, also referred to as "retransmission control information," "HARQ-ACK," "ACK/NACK," and so on) of HARQ (Hybrid Automatic Repeat reQuest) to the PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio quality information (CQI (Channel Quality Indicator)) of the downlink, acknowledge information, a scheduling request (SR), and so on are transmitted on the PUCCH. Random access preambles for establishing connections with the cells are communicated on the PRACH.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### <Radio Base Station>

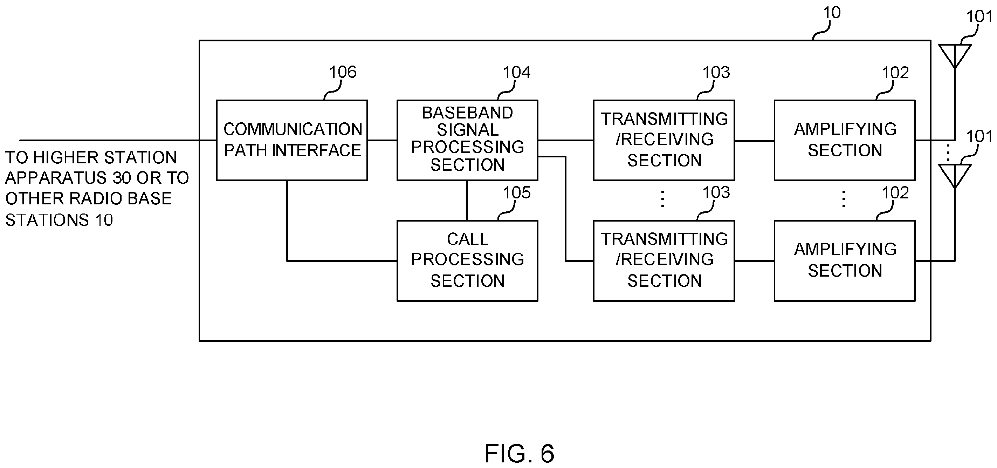

FIG. 6 is a diagram to show an example of an overall structure of the radio base station according to one embodiment of the present invention. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 in the downlink is input from the higher station apparatus 30 to the baseband signal processing section 104, via the transmission line interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs call processing (setting up, releasing and so on) for communication channels, manages the state of the radio base station 10, manages the radio resources and so on.

The transmission line interface 106 transmits and/or receives signals to and/or from the higher station apparatus 30 via a certain interface. The transmission line interface 106 may transmit and/or receive signals (backhaul signaling) with other radio base stations 10 via an inter-base station interface (for example, an optical fiber in compliance with the CPRI (Common Public Radio Interface) and an X2 interface).

The transmitting/receiving sections 103 may transmit a signal (for example, a CSI-RS) in a reference signal resource (for example, a CSI-RS resource) for measuring the channel state information (CSI).

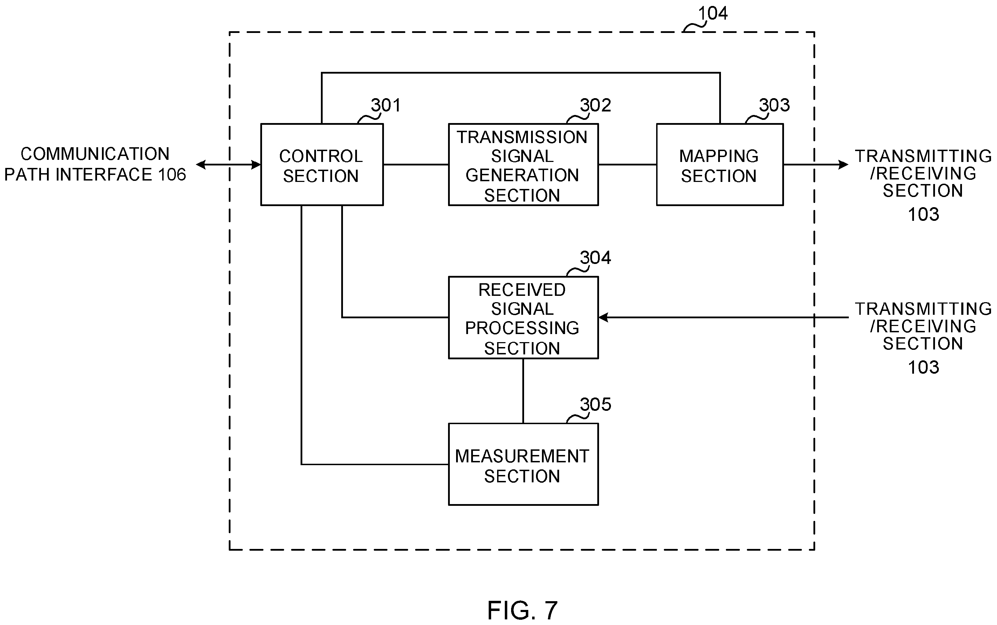

FIG. 7 is a diagram to show an example of a functional structure of the radio base station according to one embodiment of the present invention. Note that, this example primarily shows functional blocks that pertain to characteristic parts of the present embodiment, and the radio base station 10 may also include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit or control apparatus that can be described based on general understanding of the technical field to which the present invention pertains.

The control section 301, for example, controls the generation of signals in the transmission signal generation section 302, the mapping of signals by the mapping section 303, and so on. The control section 301 controls the signal receiving processes by the received signal processing section 304, the measurements of signals by the measurement section 305, and so on.

The control section 301 controls the scheduling (for example, resource allocation) of system information, a downlink data signal (for example, a signal transmitted on the PDSCH), a downlink control signal (for example, a signal transmitted on the PDCCH and/or the EPDCCH. acknowledgment information, and so on). Based on the results of determining necessity or not of retransmission control to the uplink data signal, or the like, the control section 301 controls generation of a downlink control signal, a downlink data signal, and so on. The control section 301 controls the scheduling of a synchronization signal (for example, a PSS (Primary Synchronization Signal)/an SSS (Secondary Synchronization Signal)), a downlink reference signal (for example, a CRS, a CSI-RS, a DMRS), and so on.

The control section 301 controls scheduling of an uplink data signal (for example, a signal transmitted on the PUSCH), an uplink control signal (for example, a signal transmitted on the PUCCH and/or the PUSCH, acknowledgment information, and so on), a random access preamble (for example, a signal transmitted on the PRACH), an uplink reference signal, and so on.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present invention pertains.

For example, the transmission signal generation section 302 generates DL assignment to signal assignment information of downlink data and/or UL grant to signal assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present invention pertains.

The received signal processing section 304 performs a receiving process (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present invention pertains.

The received signal processing section 304 outputs the information decoded by the receiving process to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements on the received signals. The measurement section 305 can be constituted with a measurer, a measurement circuit or measurement apparatus that can be described based on general understanding of the technical field to which the present invention pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio)), a signal strength (for example, RSSI (Received Signal Strength Indicator)), channel information (for example, CSI), and so on. The measurement results may be output to the control section 301.

### <User Terminal>

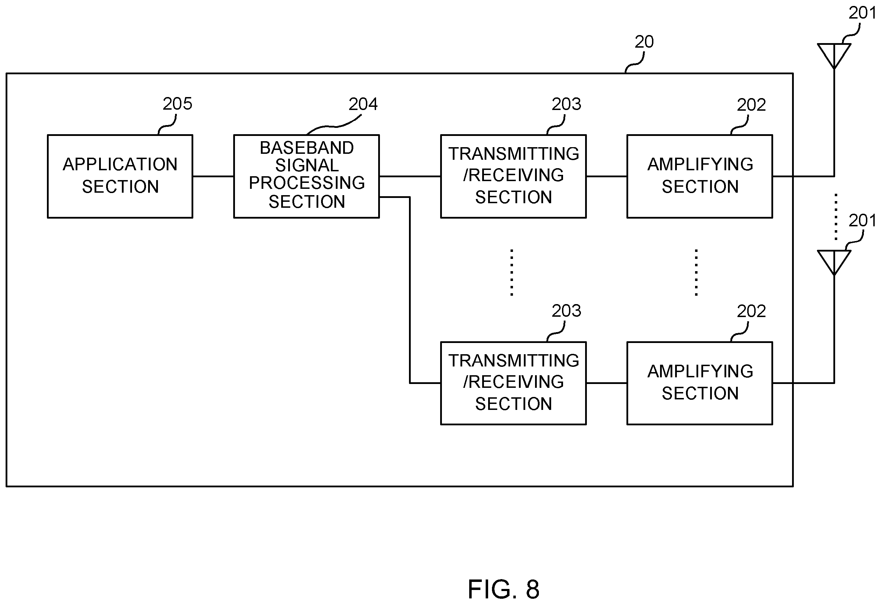

FIG. 8 is a diagram to show an example of an overall structure of a user terminal according to one embodiment of the present invention. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present invention pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 may receive a signal (for example, a CSI-RS) in a reference signal resource (for example, a CSI-RS resource) for measuring the channel state information (CSI).

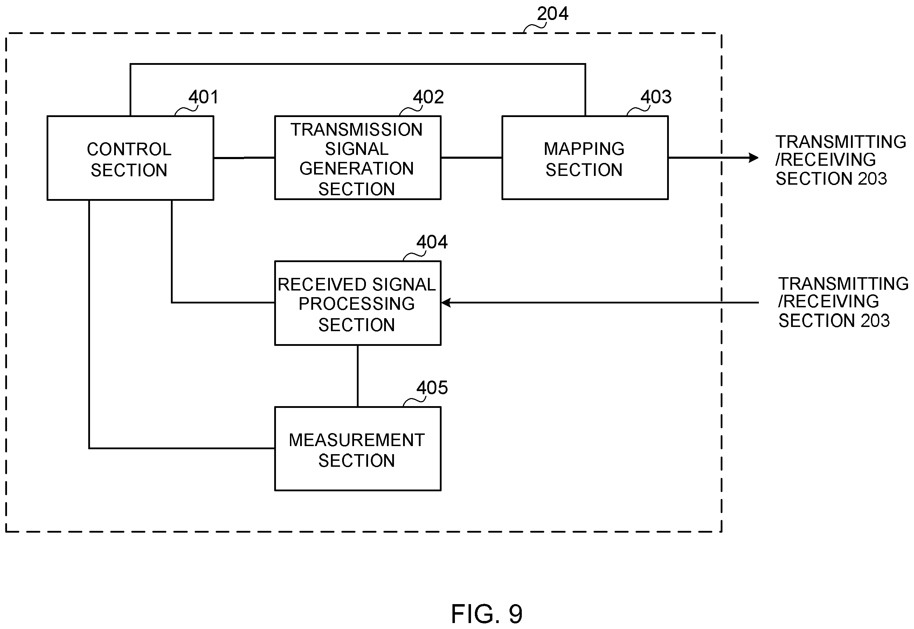

FIG. 9 is a diagram to show an example of a functional structure of a user terminal according to one embodiment of the present invention. Note that, this example primarily shows functional blocks that pertain to characteristic parts of the present embodiment, and the user terminal 20 may also include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present invention pertains.

The control section 401, for example, controls the generation of signals by the transmission signal generation section 402, the mapping of signals by the mapping section 403, and so on. The control section 401 controls the signal receiving processes by the received signal processing section 404, the measurements of signals by the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

The control section 401, when acquiring various pieces of information signaled from the radio base station 10, from the received signal processing section 404, may update parameters used for the control based on the acquired information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present invention pertains.

For example, the transmission signal generation section 402 generates an uplink control signal about the acknowledge information, the channel state information (CSI), and so on, based on the commands from the control section 401. The transmission signal generation section 402 generates uplink data signals, based on commands from the control section 401. For example, when a UL grant is included in a downlink control signal that is signaled from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present invention pertains.

The received signal processing section 404 performs a receiving process (for example, demapping, demodulation, decoding, and so on) on the received signals input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit or signal processing apparatus that can be described based on general understanding of the technical field to which the present invention pertains. The received signal processing section 404 can constitute the receiving section according to the present invention.

The received signal processing section 404 outputs the information decoded in the receiving process to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements on the received signals. The measurement section 405 can be constituted with a measurer, a measurement circuit or measurement apparatus that can be described based on general understanding of the technical field to which the present invention pertains.

For example, the measurement section 405 may perform RRM measurement, CSI measurement, and so on, based on the received signal. The measurement section 405 may measure a received power (for example, RSRP), a received quality (for example, RSRQ, SINR), a signal strength (for example, RSSI), channel information (for example, CSI), and so on. The measurement results may be output to the control section 401.

The control section 401 may control, based on the indication information received from radio base station 10 (for example, the activation command or the deactivation command), activation or deactivation of the reference signal resource (for example, CSI-RS resource) and/or channel state information reporting (for example, CSI reporting), and signaling on receiving of the indication information (for example, acknowledge information or CSI reporting).

The control section 401 may use a radio resource (for example, PUCCH resource or PUSCH resource) indicated by the indication information or the downlink control information for scheduling the indication information (for example, DL DCI) to control transmission of the acknowledge information (for example, HARQ-ACK or MAC CE) for the indication information, or transmission of the channel state information reporting.

In a case that the reference signal resource is activated, the control section 401 may control at least one of decoding of the downlink data assuming rate matching of the downlink data based on the reference signal resource, and measuring of the reference signal resource a certain time (for example, x2) after the indication information.

In a case that the channel state information reporting is activated, the control section 401 may control at least one of rate matching of the uplink data in a case that the channel state information reporting collides with the uplink data and reporting of a result of measuring the reference signal resource a certain time (for example, y2) after the indication information.

The indication information may include at least two of activation or deactivation of the reference signal resource and/or channel state information reporting in the same frequency band (for example, CC or BWP), activation or deactivation of the reference signal resource and/or channel state information reporting in another frequency band, activation or deactivation of the partial band (for example, BWP), and activation or deactivation of the secondary cell.

### <Hardware Structure>

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

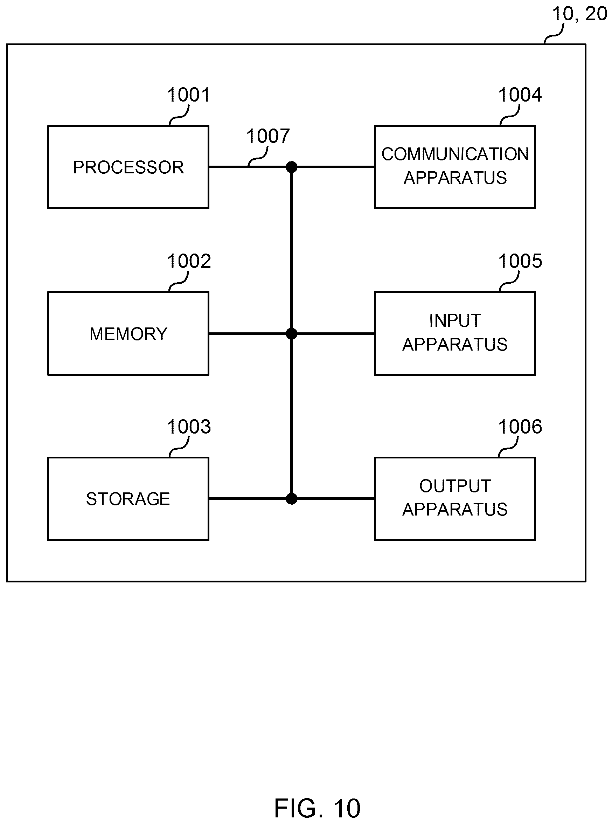

For example, a radio base station, a user terminal, and so on according to one embodiment of the present invention may function as a computer that executes the processes of the radio communication method of the present invention. FIG. 10 is a diagram to show an example of a hardware structure of the radio base station and the user terminal according to one embodiment of the present invention. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control reading and/or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present invention.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via a wired and/or wireless network, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present specification and/or the terminology that is needed to understand the present specification may be replaced by other terms that convey the same or similar meanings. For example, "channels" and/or "symbols" may be "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks, and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource region of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present specification may be represented in absolute values or in relative values with respect to certain values, or may be represented in another corresponding information. For example, radio resources may be specified by certain indices.

The names used for parameters and so on in the present specification are in no respect limiting. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Signaling of information is by no means limited to the aspects/embodiments described in the present specification, and other methods may be used as well. For example, signaling of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be signaled using, for example, MAC control elements (MAC CEs).

Also, signaling of certain information (for example, signaling of "X holds") does not necessarily have to be signaled explicitly, and can be signaled implicitly (by, for example, not signaling this certain information or signaling another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" used in the present specification can be used interchangeably.

In the present specification, the terms "base station (BS)," "radio base station," "eNB," "gNB," "cell," "sector, " "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in the present specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in the present specification may be interpreted as radio base stations. In this case, the radio base stations 10 may have the functions of the user terminals 20 described above.

Actions which have been described in the present specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present specification may be used individually or in combinations, which may be switched depending on the mode of implementation. The order of processes, sequences, flowcharts, and so on that have been used to describe the aspects/embodiments herein may be reordered as long as inconsistencies do not arise. For example, although various methods have been illustrated in the present specification with various components of steps in exemplary orders, the specific orders that are illustrated herein are by no means limiting.

The aspects/embodiments illustrated in the present specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in the present specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up, (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present specification, when two elements are connected, the two elements may be considered "connected" or "coupled" to each other by using one or more electrical wires, cables and/or printed electrical connections, and, as some nonlimiting and non-inclusive examples, by using electromagnetic energy having wavelengths in radio frequency regions, microwave regions and/or (both visible and invisible) optical regions, or the like.

In the present specification, the phrase "A and B are different" may mean that "A and B are different from each other." The terms "separate," "be coupled" and so on may be interpreted similarly.

When terms such as "including," "comprising," and variations of these are used in the present specification or in claims, these terms are intended to be inclusive, in a manner similar to the way the term "provide" is used. Furthermore, the term "or" as used in the present specification or in claims is intended to be not an exclusive disjunction.

Now, although the present invention has been described in detail above, it should be obvious to a person skilled in the art that the present invention is by no means limited to the embodiments described in the present specification. Consequently, the description in the present specification is provided only for the purpose of explaining examples, and should by no means be construed to limit the present invention in any way.

## Claims

1. A terminal (20) comprising:
a receiving section (203) configured to receive from a base station (10) a higher layer parameter indicating a periodicity of a semi-persistent channel state information, SP-CSI, reporting; and
a control section (401) configured to perform the SP-CSI reporting based on one of a downlink control information for activation of the SP-CSI reporting on a physical uplink shared channel, PUSCH, and a first medium access control, MAC, control element, CE, for activation of the SP-CSI reporting on a physical uplink control channel, PUCCH, wherein the higher layer parameter further indicates a configuration of a resource for SP-CSI-RS, and the control section (401) is configured to perform measurement of the resource for the SP-CSI-RS based on a second MAC CE for activation of the resource for the SP-CSI-RS,
wherein the control section (401) is configured to determine, based on a fixed duration of time, a slot to perform an SP-CSI reporting corresponding to the first MAC CE, and the control section (401) is configured to determine, based on the fixed duration of time, a slot to perform measurement of the resource for the SP-CSI-RS corresponding to the second MAC CE.

2. The terminal (20) according to claim 1, wherein
the second MAC CE is transmitted by a physical downlink shared channel, PDSCH, and is indicated the PUCCH resource to transmit acknowledge information by the PUCCH resource indication field included downlink control information scheduling the PDSCH, and
wherein the PUCCH resource is included a set, configured by higher layer signaling, of PUCCH resources.

3. The terminal (20) according to claim 1, wherein
the downlink control information has a downlink control information format for scheduling of the PUSCH, and a cyclic redundancy check, CRC, of the downlink control information is scrambled by an SP-CSI-radio network temporary identifier, RNTI.

4. A radio communication method for a terminal (20) comprising:
receiving from a base station (10) a higher layer parameter indicating a periodicity of a semi-persistent channel state information, SP-CSI, reporting,
performing the SP-CSI reporting based on one of a downlink control information for activation of the SP-CSI reporting on a physical uplink shared channel, PUSCH, and a first medium access control, MAC, control element, CE, for activation of the SP-CSI reporting on a physical uplink control channel, PUCCH,
performing measurement of the resource for the SP-CSI-RS based on a second MAC CE for activation of the resource for the SP-CSI-RS, wherein the higher layer parameter further indicates a configuration of a resource for SP-CSI-RS; and
determining, based on a fixed duration of time, a slot to perform an SP-CSI reporting corresponding to the first MAC CE, and determining, based on the fixed duration of time, a slot to perform measurement of the resource for the SP-CSI-RS corresponding to the second MAC CE.

5. A base station (10) comprising:
a transmitting section (103) configured to transmit a higher layer parameter indicating a periodicity of a semi-persistent channel state information, SP-CSI, reporting; and
a control section (301) configured to indicate to perform the SP-CSI reporting based on one of a downlink control information for activation of the SP-CSI reporting on a physical uplink shared channel, PUSCH, and a first medium access control, MAC, control element, CE, for activation of the SP-CSI reporting on a physical uplink control channel, PUCCH,
wherein the higher layer parameter further indicates a configuration of a resource for SP-CSI-RS, and the control section (301) is configured to indicate to perform measurement of the resource for the SP-CSI-RS based on a second MAC CE for activation of the resource for the SP-CSI-RS.

6. A system comprising a terminal (20) and a base station (10), wherein:
the terminal (20) comprises:
a receiving section (203) configured to receive a higher layer parameter indicating a periodicity of a semi-persistent channel state information, SP-CSI, reporting; and
a control section (401) configured to perform the SP-CSI reporting based on one of a downlink control information for activation of the SP-CSI reporting on a physical uplink shared channel, PUSCH, and a first medium access control, MAC, control element, CE, for activation of the SP-CSI reporting on a physical uplink control channel, PUCCH,
wherein the higher layer parameter further indicates a configuration of a resource for SP-CSI-RS, and the control section (401) is configured to perform measurement of the resource for the SP-CSI-RS based on a second MAC CE for activation of the resource for the SP-CSI-RS,
wherein the control section (401) is configured to determine, based on a fixed duration of time, a slot to perform an SP-CSI reporting corresponding to the first MAC CE, and the control section (401) is configured to determine, based on the fixed duration of time, a slot to perform measurement of the resource for the SP-CSI-RS corresponding to the second MAC CE and
the base station (10) comprises:
a transmitting section (103) configured to transmit the higher layer parameter; and
a control section (301) configured to indicate to perform the SP-CSI reporting based on one of the downlink control information for activation of the SP-CSI reporting on the PUSCH and the MAC CE for activation of the SP-CSI reporting on the PUCCH.

## Patentansprüche

1. Endgerät (20), umfassend:
einen Empfangsabschnitt (203), der konfiguriert ist, um von einer Basisstation (10) einen Parameter der höheren Schicht zu empfangen, der eine Periodizität einer semi-persistenten Kanalzustandsinformation-, SP-CSI-, Berichterstattung anzeigt; und
einen Steuerabschnitt (401), der konfiguriert ist, um die SP-CSI-Berichterstattung auf der Grundlage einer Downlink-Steuerinformation zur Aktivierung der SP-CSI-Berichterstattung auf einem gemeinsam genutzten physikalischen Uplink-Kanal, PUSCH, oder eines ersten Medium-Access-Control-, MAC-, Steuerelements, CE, zur Aktivierung der SP-CSI-Berichterstattung auf einem physikalischen Uplink-Steuerkanal, PUCCH, auszuführen, wobei der Parameter der höheren Schicht weiter eine Konfiguration einer Ressource für SP-CSI-RS anzeigt und der Steuerabschnitt (401) konfiguriert ist, um eine Messung der Ressource für den SP-CSI-RS auf der Grundlage eines zweiten MAC CE zur Aktivierung der Ressource für den SP-CSI-RS durchzuführen,
wobei der Steuerabschnitt (401) konfiguriert ist, um auf der Grundlage einer festen Zeitdauer einen Schlitz zu bestimmen, um eine SP-CSI-Berichterstattung entsprechend dem ersten MAC CE durchzuführen, und der Steuerabschnitt (401) konfiguriert ist, um auf der Grundlage der festen Zeitdauer einen Schlitz zu bestimmen, um eine Messung der Ressource für den SP-CSI-RS entsprechend dem zweiten MAC CE durchzuführen.

2. Endgerät (20) nach Anspruch 1, wobei
das zweite MAC CE durch einen physikalischen gemeinsam genutzten Downlink-Kanal, PDSCH, übertragen wird und die PUCCH-Ressource zum Übertragen von Bestätigungsinformationen durch das PUCCH-Ressourcenanzeigefeld angezeigt wird, das Downlink-Steuerinformationen einschließt, die den PDSCH einplanen, und
wobei die PUCCH-Ressource einen Satz von PUCCH-Ressourcen einschließt, der durch Signalisierung auf höherer Ebene konfiguriert ist.

3. Endgerät (20) nach Anspruch 1, wobei
die Downlink-Steuerinformationen ein Downlink-Steuerinformationsformat für die Planung des PUSCH aufweisen und eine zyklische Redundanzprüfung (CRC) der Downlink-Steuerinformationen durch eine SP-CSI-Temporäre Funknetzwerkprüfung (RNTI) verwürfelt ist.

4. Funkkommunikationsverfahren für ein Endgerät (20), umfassend:
Empfangen eines Parameters der höheren Schicht von einer Basisstation (10), der eine Periodizität einer semi-persistenten Kanalzustandsinformation-, SP-CSI-, Berichterstattung anzeigt,
Durchführen der SP-CSI-Berichterstattung auf der Grundlage einer Downlink-Steuerinformation zur Aktivierung der SP-CSI-Berichterstattung auf einem gemeinsam genutzten physikalischen Uplink-Kanal, PUSCH, und eines ersten Medium-Access-Control-, MAC-, Steuerelements, CE, zur Aktivierung der SP-CSI-Berichterstattung auf einem physikalischen Uplink-Steuerkanal, PUCCH,
Durchführen der Messung der Ressource für den SP-CSI-RS auf der Grundlage eines zweiten MAC-CE zur Aktivierung der Ressource für den SP-CSI-RS, wobei der Parameter der höheren Schicht weiterhin eine Konfiguration einer Ressource für SP-CSI-RS angibt; und
Bestimmen, basierend auf einer festen Zeitdauer, eines Zeitschlitzes zur Durchführung einer SP-CSI-Berichterstattung entsprechend dem ersten MAC CE, und Bestimmen, basierend auf der festen Zeitdauer, eines Zeitschlitzes zur Durchführung einer Messung der Ressource für den SP-CSI-RS entsprechend dem zweiten MAC CE.

5. Basisstation (10), umfassend:
einen Übertragungsabschnitt (103), der konfiguriert ist, um einen Parameter der höheren Schicht zu übertragen, der eine Periodizität einer semi-persistenten Kanalzustandsinformation-, SP-CSI-, Berichterstattung anzeigt; und
einen Steuerabschnitt (301), der konfiguriert ist, um anzuzeigen, dass die SP-CSI-Berichterstattung auf der Grundlage einer Downlink-Steuerinformation zur Aktivierung der SP-CSI-Berichterstattung auf einem gemeinsam genutzten physikalischen Uplink-Kanal, PUSCH, oder eines ersten Medium-Access-Control-, MAC-, Steuerelements, CE, zur Aktivierung der SP-CSI-Berichterstattung auf einem physikalischen Uplink-Steuerkanal, PUCCH, durchgeführt wird,
wobei der Parameter der höheren Schicht weiter eine Konfiguration einer Ressource für SP-CSI-RS anzeigt, und der Steuerabschnitt (301) konfiguriert ist, um anzuzeigen, eine Messung der Ressource für den SP-CSI-RS auf der Grundlage eines zweiten MAC CE zur Aktivierung der Ressource für den SP-CSI-RS durchzuführen.

6. System, umfassend ein Endgerät (20) und eine Basisstation (10), wobei:
das Endgerät (20) umfasst:
einen Empfangsabschnitt (203), der konfiguriert ist, um einen Parameter der höheren Schicht zu empfangen, der eine Periodizität einer semi-persistenten Kanalzustandsinformation-, SP-CSI-, Berichterstattung anzeigt; und
einen Steuerabschnitt (401), der konfiguriert ist, um die SP-CSI-Berichterstattung auf der Grundlage einer Downlink-Steuerinformation zur Aktivierung der SP-CSI-Berichterstattung auf einem gemeinsam genutzten physikalischen Uplink-Kanal, PUSCH, oder eines ersten Medium-Access-Control-, MAC-, Steuerelements, CE, zur Aktivierung der SP-CSI-Berichterstattung auf einem physikalischen Uplink-Steuerkanal, PUCCH, auszuführen,
wobei der Parameter der höheren Schicht weiter eine Konfiguration einer Ressource für SP-CSI-RS anzeigt und der Steuerabschnitt (401) konfiguriert ist, um eine Messung der Ressource für den SP-CSI-RS auf der Grundlage eines zweiten MAC CE zur Aktivierung der Ressource für den SP-CSI-RS durchzuführen,
wobei der Steuerabschnitt (401) konfiguriert ist, um auf der Grundlage einer festen Zeitdauer einen Zeitschlitz zur Durchführung einer SP-CSI-Berichterstattung entsprechend dem ersten MAC CE zu bestimmen, und der Steuerabschnitt (401) konfiguriert ist, um auf der Grundlage der festen Zeitdauer einen Zeitschlitz zur Durchführung einer Messung der Ressource für die SP-CSI-RS entsprechend dem zweiten MAC CE zu bestimmen und
wobei die Basisstation (10) umfasst:
einen Übertragungsabschnitt (103), der konfiguriert ist, um den Parameter der höheren Schicht zu übertragen; und
einen Steuerabschnitt (301), der konfiguriert ist, um anzuzeigen, dass die SP-CSI-Berichterstattung auf der Grundlage entweder der Downlink-Steuerinformationen zur Aktivierung der SP-CSI-Berichterstattung auf dem PUSCH oder des MAC CE zur Aktivierung der SP-CSI-Berichterstattung auf dem PUCCH durchgeführt wird.

## Revendications

1. Terminal (20) comprenant :
une section de réception (203) configurée pour recevoir, à partir d'une station de base (10), un paramètre de couche supérieure indiquant une périodicité d'un rapport d'information d'état de canal semi-persistante, SP-CSI ; et
une section de commande (401) configurée pour réaliser le rapport de SP-CSI sur la base d'un parmi une information de commande de liaison descendante pour l'activation du rapport de SP-CSI sur un canal physique partagé de liaison montante, PUSCH, et un premier élément de commande, CE, de commande d'accès au support, MAC, pour l'activation du rapport de SP-CSI sur un canal physique de commande de liaison montante, PUCCH, dans lequel le paramètre de couche supérieure indique en outre une configuration d'une ressource pour SP-CSI-RS, et la section de commande (401) est configurée pour réaliser une mesure de la ressource pour le SP-CSI-RS sur la base d'un second CE MAC pour l'activation de la ressource pour le SP-CSI-RS,
dans lequel la section de commande (401) est configurée pour déterminer, sur la base d'une durée fixe, un créneau pour réaliser un rapport de SP-CSI correspondant au premier CE MAC, et la section de commande (401) est configurée pour déterminer, sur la base de la durée fixe, un créneau pour réaliser une mesure de la ressource pour le SP-CSI-RS correspondant au second CE MAC.

2. Terminal (20) selon la revendication 1, dans lequel le second CE MAC est transmis par un canal physique partagé de liaison descendante, PDSCH, et la ressource PUCCH pour transmettre une information d'accusé de réception est indiquée par le champ d'indication de ressource PUCCH inclus dans l'information de commande de liaison descendante planifiant le PDSCH, et
dans lequel la ressource PUCCH est incluse dans un ensemble, configuré par une signalisation de couche supérieure, de ressources PUCCH.

3. Terminal (20) selon la revendication 1, dans lequel
les informations de commande de liaison descendante présentent un format d'information de commande de liaison descendante pour la planification du PUSCH, et un contrôle de redondance cyclique, CRC, de l'information de commande de liaison descendante est brouillé par un identifiant temporaire de réseau radio, RNTI, SP-CSI.

4. Procédé de communication radio pour un terminal (20) comprenant :
la réception, à partir d'une station de base (10), d'un paramètre de couche supérieure indiquant une périodicité d'un rapport d'information d'état de canal semi-persistante, SP-CSI,
la réalisation du rapport de SP-CSI sur la base d'un parmi une information de commande de liaison descendante pour l'activation du rapport de SP-CSI sur un canal physique partagé de liaison montante, PUSCH, et un premier élément de commande, CE, de commande d'accès au support, MAC, pour l'activation du rapport de SP-CSI sur un canal physique de commande de liaison montante, PUCCH,
la réalisation de la mesure de la ressource pour le SP-CSI-RS sur la base d'un second CE MAC pour l'activation de la ressource pour le SP-CSI-RS, dans lequel le paramètre de couche supérieure indique en outre une configuration d'une ressource pour SP-CSI-RS ; et
la détermination, sur la base d'une durée fixe, d'un créneau pour réaliser un rapport de SP-CSI correspondant au premier CE MAC, et la détermination, sur la base de la durée fixe, d'un créneau pour réaliser une mesure de la ressource pour le SP-CSI-RS correspondant au second CE MAC.

5. Station de base (10) comprenant :
une section de transmission (103) configurée pour transmettre un paramètre de couche supérieure indiquant une périodicité d'un rapport d'information d'état de canal semi-persistante, SP-CSI ; et
une section de commande (301) configurée pour indiquer de réaliser le rapport de SP-CSI sur la base d'un parmi une information de commande de liaison descendante pour l'activation du rapport de SP-CSI sur un canal physique partagé de liaison montante, PUSCH, et un premier élément de commande, CE, de commande d'accès au support, MAC, pour l'activation du rapport de SP-CSI sur un canal physique de commande de liaison montante, PUCCH,
dans laquelle le paramètre de couche supérieure indique en outre une configuration d'une ressource pour SP-CSI-RS, et la section de commande (301) est configurée pour indiquer de réaliser une mesure de la ressource pour le SP-CSI-RS sur la base d'un second CE MAC pour l'activation de la ressource pour le SP-CSI-RS.

6. Système comprenant un terminal (20) et une station de base (10), dans lequel :
le terminal (20) comprend :
une section de réception (203) configurée pour recevoir un paramètre de couche supérieure indiquant une périodicité d'un rapport d'information d'état de canal semi-persistante, SP-CSI ; et
une section de commande (401) configurée pour réaliser le rapport de SP-CSI sur la base d'un parmi une information de commande de liaison descendante pour l'activation du rapport de SP-CSI sur un canal physique partagé de liaison montante, PUSCH, et un premier élément de commande, CE, de commande d'accès au support, MAC, pour l'activation du rapport de SP-CSI sur un canal physique de commande de liaison montante, PUCCH,
dans lequel le paramètre de couche supérieure indique en outre une configuration d'une ressource pour SP-CSI-RS, et la section de commande (401) est configurée pour réaliser une mesure de la ressource pour le SP-CSI-RS sur la base d'un second CE MAC pour l'activation de la ressource pour le SP-CSI-RS,
dans lequel la section de commande (401) est configurée pour déterminer, sur la base d'une durée fixe, un créneau pour réaliser un rapport de SP-CSI correspondant au premier CE MAC, et la section de commande (401) est configurée pour déterminer, sur la base de la durée fixe, un créneau pour réaliser une mesure de la ressource pour le SP-CSI-RS correspondant au second CE MAC et
la station de base (10) comprend :
une section de transmission (103) configurée pour transmettre le paramètre de couche supérieure ; et
une section de commande (301) configurée pour indiquer de réaliser le rapport de SP-CSI sur la base d'un parmi l'information de commande de liaison descendante pour l'activation du rapport de SP-CSI sur le PUSCH et le CE MAC pour l'activation du rapport de SP-CSI sur le PUCCH.
